# DEMANDE DE BREVET EUROPEEN

(11) **EP 2 706 022 A1**
(43) Date de publication de la demande: **12.03.2014**
(21) Numéro de dépôt: 13183028.3
(22) Date de dépôt: 04.09.2013
(51) Int. Cl.: B65F 1/14

(54) **Conteneur de déchets**

(30) Priorité: 06.09.2012 FR 1258355
(71) Demandeur: COMPAGNIE PLASTIC OMNIUM, 69007 Lyon (FR)
(72) Inventeur: Ollier, Fabrice, 01700 MIRIBEL (FR); Fillon, Jérôme, 43000 LE PUY EN VELAY (FR)
(74) Mandataire: Thiollier, Clémence-Olivia Laure Marie

(57) **Abrégé**

Ce conteneur de déchets (10) comprend une ouverture d'introduction de déchets (20) et une enceinte (11) adaptée pour recevoir simultanément au moins une première et une deuxième cuve (14) de réception des déchets. Celles-ci sont mobiles l'une par rapport à l'autre et le conteneur (10) comprend un mécanisme de déplacement (16) des cuves (14) qui permet de disposer chaque cuve (14) dans une position de réception des déchets (18A). La cuve (14) est alors en regard de l'ouverture d'introduction des déchets (20), pendant que l'autre cuve (14) se trouve dans une position d'attente (18B). Le mécanisme de déplacement (16) est configuré de sorte que lorsque la première cuve (14) se trouve en position de réception des déchets (18A), la première et la seconde cuve (14) sont superposées l'une au-dessus de l'autre.

## Description

L'invention concerne le domaine technique des conteneurs de collecte de déchets.

On connaît déjà dans l'état de la technique un conteneur de déchets du type borne d'apport volontaire, qui est enterré ou semi-enterré, décrit par exemple dans le document EP1953095. Ce conteneur comporte une ouverture d'introduction de déchets, ainsi qu'une enceinte comportant plusieurs cuves de collecte de déchets, agencées de sorte que l'on puisse introduire des déchets dans l'une ou dans l'autre des cuves. Les cuves sont mobiles l'une par rapport à l'autre.

Un tel conteneur permet donc aux usagers de déverser facilement des déchets dans la cuve de réception des déchets, qui, lorsque remplie, est remplacée par une cuve vide qui se trouvait en position d'attente. Le mécanisme qui assure le remplacement de la cuve remplie par une cuve vide permet la disponibilité d'un grand volume pour le rejet de déchets.

Toutefois, le fait de prévoir plusieurs cuves génère un encombrement surfacique important. Ainsi, l'installation d'un tel conteneur oblige la société ou la collectivité utilisatrice du conteneur à acheter ou à louer une parcelle de terre relativement importante.

La présente invention a notamment pour but de proposer un conteneur d'apport volontaire qui occupe une parcelle de terrain réduite.

A cet effet, l'invention a pour objet un conteneur de déchets comprenant une ouverture d'introduction de déchets et une enceinte adaptée pour recevoir simultanément au moins une première et une deuxième cuves de réception des déchets, mobiles l'une par rapport à l'autre, le conteneur comprenant un mécanisme de déplacement des cuves, permettant de disposer chaque cuve dans une position de réception des déchets, la cuve étant alors en regard de l'ouverture d'introduction des déchets, pendant que l'autre cuve se trouve dans une position d'attente, le mécanisme de déplacement étant configuré de sorte que lorsque la première cuve se trouve en position de réception des déchets, la première et la seconde cuve sont superposées l'une au-dessus de l'autre.

Ainsi, le conteneur de déchets présente un volume de stockage important alors qu'il occupe une moindre surface au sol, puisque les cuves peuvent être superposées l'une au-dessus de l'autre. En effet, il est possible, grâce au conteneur proposé ci-dessus, de doubler le volume de réception de déchets, pour une même emprise au sol. Ceci permet à l'utilisateur du conteneur de n'avoir à louer ou à acheter qu'une petite surface de terrain. Un avantage particulier de la grande capacité de stockage du conteneur réside dans le fait que l'on peut optimiser le parcours de collecte, donc réduire l'impact sur l'environnement lié aux trajets du camion de collecte.

De plus, les cuves utilisées à l'intérieur de ce conteneur de collecte peuvent être standards, ce qui a pour effet de réduire le coût de maintenance d'un tel conteneur. Les cuves peuvent ainsi être collectées par des camions traditionnels comportant des moyens de levage de type peigne ou aptes à accrocher des tourillons.

Un autre avantage d'un tel conteneur de collecte est la possibilité de fractionnement des déchets dans le cadre du tri sélectif. En effet, un tel conteneur peut par exemple recevoir deux cuves pour les ordures ménagères, une pour le verre, et la quatrième cuve pour les cartons d'emballage, sans forcément requérir une ouverture spécifique pour chaque type de déchet, l'utilisateur pouvant faire déplacer les cuves en fonction du déchet qu'il souhaite introduire. Ceci est particulièrement intéressant car cela permet de fournir des lieux de collecte multi-fractions sans pour autant nécessiter une grande surface au sol.

Par ailleurs, pour effectuer le vidage des cuves au moyen d'un camion de collecte, il est relativement difficile de faire remonter les cuves remplies depuis leurs positions basses, située sous le niveau du sol du fait que le conteneur est enterré ou semi-enterré. Ainsi, avec le conteneur proposé ci-dessus, le camion de collecte n'a pas besoin forcément d'aller chercher une cuve en position basse, puisqu'il peut la récupérer à la même hauteur que dans la position de réception des déchets.

Enfin, un tel conteneur est une alternative plus propre et plus esthétique que dans le cas où quatre bacs qui seraient positionnés côte à côte sur le sol.

Un conteneur de déchets tel que présenté ci-dessus peut en outre comporter l'une ou plusieurs des caractéristiques suivantes, prises seules ou en combinaison.
- L'enceinte est adaptée pour recevoir simultanément quatre cuves, superposées deux à deux. Ainsi, l'espace disponible pour la collecte des déchets est volumineux et disponible à un camion de collecte, tout en occupant au sol uniquement la surface correspondant à deux cuves.
- Chaque cuve est montée sur roulettes. Ce mode de réalisation est particulièrement intéressant en ce que les cuves munies de roulettes peuvent être facilement déplacées par un opérateur, par roulage sur le sol, notamment lors des opérations de vidage des cuves. En particulier grâce aux roulettes, les cuves peuvent être sorties facilement du conteneur et il n'est pas nécessaire d'avoir recours à une grue pour les sortir. En outre, un tel conteneur autorise l'utilisation de cuves standards munies de roulettes, sur lesquelles on rapporte éventuellement uniquement des moyens de préhension latérale adaptés pour coopérer avec une chaîne de traction des cuves, ce qui permet de ne pas modifier en conséquence les équipements existants, en particulier les camions de collecte. Ainsi, la collecte peut être effectuée par des camions de levage habituellement utilisés pour des bacs à deux roues et/ou à quatre roues. On peut en particulier effectuer une collecte de ce conteneur d'apport volontaire au cours d'une tournée de ramassage classique des déchets des usagers. Le vidage est ainsi effectué de la même façon que pour un conteneur classique d'apport volontaire, c'est-à-dire en faisant sortir les cuves roulantes par une porte arrière du conteneur. L'utilisation de cuves standards facilite par ailleurs la maintenance ou le remplacement de ces cuves, puisqu'elles sont largement disponibles dans la plupart des pays, ces cuves répondant à des normes appliquées dans différents pays, d'où une maintenance simplifiée et plus rapide. De telles cuves standards permettent donc de réduire les coûts. De préférence, les cuves présentent chacune quatre roulettes, qui sont disposées au bas de chaque cuve et permettent de rouler lorsque les cuves sont extraites du conteneur, lors de la collecte par exemple. De préférence également, les cuves ont un volume compris de préférence entre 400 et 1100 litres, par exemple de 1000 litres chacune.

- Chaque cuve comporte une collerette de préhension par un camion de collecte de déchets. Une telle collerette est de préférence configurée pour coopérer avec un peigne de levage, de sorte qu'un camion de collecte habituellement utilisé pour le ramassage des ordures ménagères muni d'un bras de levage avec peigne puisse soulever les cuves.
- Le conteneur comprend une plaque escamotable, formant une passerelle pour les cuves. Cette plaque est configurée pour faire rouler les cuves entre l'extérieur et l'intérieur de l'enceinte. Ainsi, lorsque les cuves sont pleines, le mécanisme de déplacement peut les positionner de sorte que leurs roues se trouvent sensiblement au niveau du sol, puis la plaque escamotable peut être déployée sous les roues, ce qui permet de sortir les cuves aisément pour être vidées, puis de les repositionner dans l'enceinte une fois vidées.
- Lorsque l'une des cuves se trouve dans une position de réception des déchets, les trois autres cuves se trouvent dans une position d'attente.- Le conteneur comporte deux ouvertures opposées d'introduction de déchets et deux des cuves peuvent prendre simultanément une position de réception des déchets, les deux autres cuves se trouvant dans une position d'attente. Ainsi deux utilisateurs peuvent jeter simultanément des déchets dans le conteneur de déchets, qui est en outre accessible par plusieurs côtés.
- Le conteneur comprend une ouverture de vidage du conteneur, disposée du côté opposé à l'ouverture d'introduction des déchets. Ainsi, les cuves peuvent être sorties facilement du conteneur et il n'est pas nécessaire d'avoir recours à une grue pour sortir les cuves. En fait, pour sortir les cuves du conteneur, il suffit à un opérateur de tirer les cuves vers l'extérieur de l'enceinte, à travers l'ouverture de vidage du conteneur, afin que les roulettes prennent appui sur le sol. Ensuite, l'opérateur doit simplement faire rouler la cuve vers le camion en vue de son levage et de son vidage, comme pour une cuve d'ordures ménagères classique. Cette configuration étant proche de la configuration d'actuelles bornes d'apport volontaire, il n'est pas nécessaire de modifier les façons de procéder des camions de collecte.
- Le mécanisme de déplacement est configuré pour déplacer les cuves le long d'un parcours dont le contour est sensiblement carré ou rectangulaire.
- Le mécanisme de déplacement des cuves comporte un élément de traction des cuves, tels qu'une chaîne ou un câble, sur lequel chaque cuve est fixée, l'élément de traction étant entraîné de façon à déplacer les cuves entre leur position de réception de déchets et une ou plusieurs positions d'attente. De préférence, le mécanisme comprend deux éléments de tractions, montés parallèles, de façon à tirer les cuves par leurs deux côtés opposés.
- Le mécanisme de déplacement des cuves est muni d'au moins un élément rotatif entraînant l'élément de traction, par exemple une roue dentée ou une poulie.
- Le mécanisme de déplacement des cuves fonctionne au moyen d'un moteur ou d'un système à bras de levier actionnable par un utilisateur. Ainsi, l'utilisateur ou une personne autorisée peut faire se déplacer les cuves lorsque la cuve en position de réception des déchets est pleine. De manière alternative, il pourrait être détecté de façon automatique qu'une cuve est pleine et cela pourrait générer le fonctionnement automatique du mécanisme.
- Le conteneur est semi-enterré, il comprend une partie haute située au-dessus du niveau du sol, comportant l'ouverture d'introduction de déchets, et une partie basse située en-dessous du niveau du sol, une cuve en position de réception des déchets se trouvant dans la partie haute, et une cuve en position d'attente se trouvant dans la partie basse ou dans la partie haute.
- Le conteneur constitue un conteneur d'apport volontaire de déchets.
- Les cuves sont destinées à recevoir au moins deux types différents de déchets, de préférence trois types de déchets. Dans une telle configuration, le conteneur comprend de préférence plusieurs ouvertures d'introduction de déchets, au moins une ouverture par type de déchet, par exemple des opercules correspondant à la fraction de déchets à déposer.
- L'ouverture d'introduction des déchets est automatiquement fermée lorsque les cuves sont en cours de déplacement, lorsqu'une cuve en position de réception des déchets est pleine, ou encore lorsque l'ouverture d'introduction correspond à un type de déchet différent de celui auquel correspond la cuve se trouvant en position d'introduction des déchets.
- Le conteneur comporte un système de pesée des bacs, de préférence apte à actionner le déplacement des cuves de façon à présenter une cuve non pleine en position d'introduction des déchets. Ce système de pesée est en particulier intéressant pour assurer un contrôle ou un équilibrage du remplissage des cuves dans le conteneur, notamment pour un contrôle des efforts ou charges.
- Le conteneur comporte un système de contrôle du niveau de remplissage des cuves, ce qui permet d'éviter tout débordement.
- Chaque cuve comprend une étiquette électronique de stockage de données numériques, notamment une puce de type RFID (pour « Radio Frequency IDentification »). Cette étiquette permet éventuellement, outre la lecture de données, l'écriture de données relatives à la cuve. L'étiquette est placée de préférence sous une collerette de préhension, pour permettre sa lecture / écriture au moment de la préhension par un camion de collecte. Elle est lisible notamment par un lecteur embarqué sur le camion de collecte. Ainsi, un camion de collecte comprenant un lecteur embarqué sur le camion de collecte permet d'optimiser le vidage des cuves en fonction notamment d'un type de déchets particuliers contenus dans chacune des cuves du conteneur d'apport volontaire, par exemple en refusant le vidage de toute cuve dont l'étiquette électronique indique que la cuve n'est pas destinée à contenir le type de déchets de la collecte en cours ou encore que les déchets qu'elle contient ne sont pas compatibles avec le type de déchets de la collecte en cours. Selon un autre avantage particulier, lorsque le camion effectue une tournée de collecte d'ordures ménagères intégrant dans son parcours des cuves de particuliers pour lesquels une tarification incitative a été mise en place, par exemple au moyen de puces RFID disposées sur leurs cuves, la collecte du contenu d'un conteneur d'apport volontaire tel que décrit ci-dessus et dont les cuves sont munies de puces RFID peut être effectuée de façon à indiquer au camion de collecte que la cuve n'est pas une cuve de particulier, sans que cette collecte ne perturbe les informations de tarification incitative qui concernent les déchets des utilisateurs.
- Le conteneur comprend un système d'alarme en cas de bacs pleins, permettant d'indiquer, à l'utilisateur ou à une société de collecte de déchets, que les cuves sont à déplacer et/ou à venir vider.

L'invention a également pour objet une cuve configurée pour être utilisée dans un conteneur tel que présenté ci-dessus, comprenant des moyens de préhension latérale par le mécanisme de déplacement des cuves et comprenant de préférence un tourillon adapté pour coopérer avec l'élément de traction. Ainsi, les tourillons permettent de fixer les cuves sur deux éléments de tractions parallèle et par ailleurs de soulever les cuves lors de leur vidage dans un camion de collecte.

L'invention a également pour objet un mécanisme de déplacement de cuves pour un conteneur tel que présenté ci-dessus.

L'invention sera mieux comprise à la lecture de la description qui va suivre, donnée uniquement à titre d'exemple et faite en se référant aux dessins dans lesquels :
- La figure 1 est une vue en coupe d'un conteneur de déchets qui est semi-enterré dans le sol,
- la figure 2 est une vue en perspective de l'intérieur du conteneur de déchets de la figure 1,
- la figure 3 est une vue de face de l'intérieur du conteneur de déchets de la figure 1, et
- la figure 4 est une cuve de réception des déchets avec une représentation partielle d'un élément de traction disposé dans le conteneur de la figure 1.

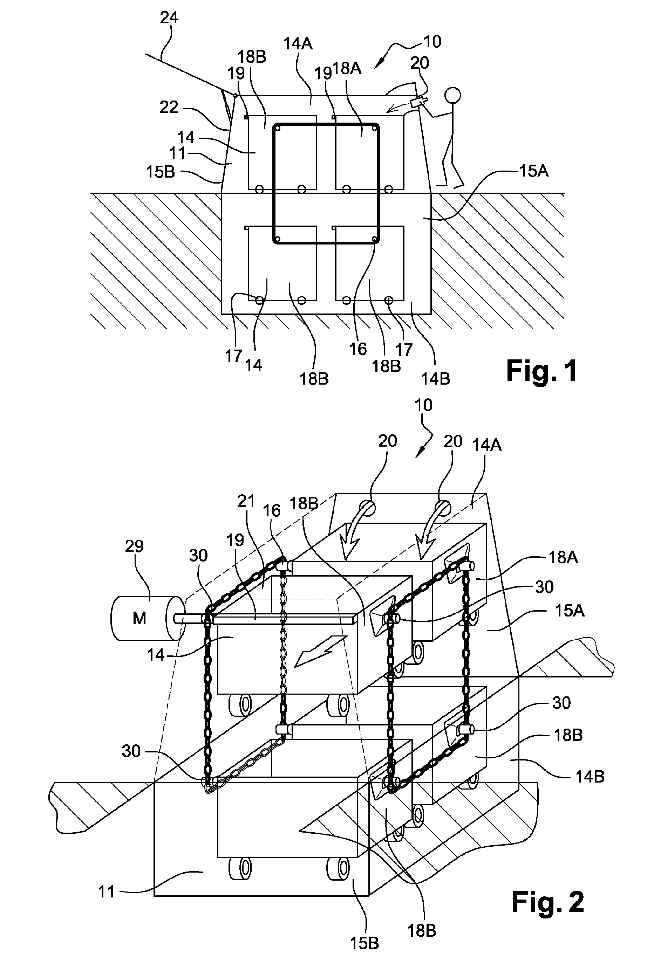

On a représenté sur les figures 1 et 2 un conteneur de déchets 10, aussi appelé conteneur d'apport volontaire de déchets, qui forme une enceinte 11 comprenant, dans cet exemple, quatre cuves 14 de réception des déchets. On peut voir que ce conteneur de déchets est semi-enterré dans le sol. Dans l'exemple, il dépasse du sol d'une hauteur supérieure à 1 mètre, de préférence à environ 1,75 ou 1,80 mètres. Toutefois, on comprend que l'on peut utiliser un conteneur intégralement enterré, ou partiellement intégré dans une proportion différente. Le conteneur de déchets comporte une partie haute 14A qui se trouve au-dessus du sol et une partie basse 14B qui se trouve en dessous du niveau du sol. L'enceinte 11 présente, dans cet exemple, une longueur au sol voisine de 3,80 mètres, une largeur au sol voisine de 1,5 mètres, et la partie basse enterrée a une hauteur voisine de 2,20 mètres.

Dans l'exemple, le conteneur de déchets 10, plus précisément l'enceinte 11, a une forme générale parallélépipédique et comporte des parois latérales 15A et des parois frontales 15B. D'autres formes de conteneur sont également envisageables, par exemple, on pourrait avoir un conteneur de forme arrondie. Les cuves 14 qui sont situées dans le conteneur de déchets 10, ont un profil parallélépipédique et ont une contenance comprise de préférence entre 400 et 1100 litres, par exemple de 1000 litres chacune. Chaque cuve 14 comporte une longueur L et une largeur I, la largeur des cuves I étant orientée parallèlement aux parois latérales 15B du conteneur 10. Les cuves ont quatre roulettes 17 qui sont disposées au bas de la cuve et qui leur permettent de rouler lorsque les cuves sont extraites du conteneur lors de la collecte par exemple. Par ailleurs, chaque cuve 14 comporte une collerette 19 de préhension par un camion de collecte de déchets. Plus précisément, cette collerette se situe à la périphérie de l'ouverture 21 d'introduction de déchets dans la cuve 14 et se présente sous la forme d'une gorge apte à coopérer avec un peigne de préhension articulé monté sur un camion de collecte,

Le conteneur de déchets 10 comprend un mécanisme 16 de déplacement des cuves, qui permet de disposer chaque cuve dans une position de réception des déchets 18A. Ce mécanisme permet également de déplacer une cuve d'une position de réception des déchets 18A vers une position d'attente 18B. Ainsi, les cuves 14 sont toutes mobiles les unes par rapport aux autres. Une des cuves occupe la position de réception des déchets 18A qui se trouve dans la partie haute 14A du conteneur. Cette cuve se trouve en regard de deux ouvertures d'introduction de déchets 20 qui sont ménagées sur l'une des parois frontales 15A du conteneur. De façon alternative, il pourrait n'y avoir qu'une seule ouverture 20.

Sur l'autre paroi frontale 15A du conteneur, en vis-à-vis des ouvertures d'introduction de déchets 20, se trouve une autre ouverture 22, dite ouverture de vidage 22. Cette ouverture est adaptée pour que les cuves soient sorties du conteneur afin d'être vidées par un camion de ramassage ou camion de collecte. Cette ouverture de vidage 22 est munie d'une trappe 24, qui permet l'ouverture et la fermeture du conteneur de déchets.

Deux des cuves que comporte le conteneur se trouvent côte à côte et alignées dans la partie haute 14A avec leur largeur I étant parallèle aux parois latérales 15A du conteneur. Ainsi, la cuve la plus proche de l'ouverture d'introduction de déchets 20 occupe la position de réception 18A des déchets et la cuve la plus proche de l'ouverture de vidage 22 occupe une position d'attente 18B. Le mécanisme est configuré pour que lorsqu'une des cuves est en position de réception des déchets 18A, les deux cuves 14 de la partie haute 14A sont superposées aux deux autres cuves qui sont dans une position d'attente 18B dans la partie basse 14B du conteneur. Ainsi, l'enceinte 11 comporte quatre cuves 14 superposées deux à deux.

En position normale d'utilisation, une des quatre cuves se trouve donc dans une position de réception 18B des déchets alors que trois des cuves 14 du conteneur de déchets 10 se trouvent dans une position d'attente 18B.

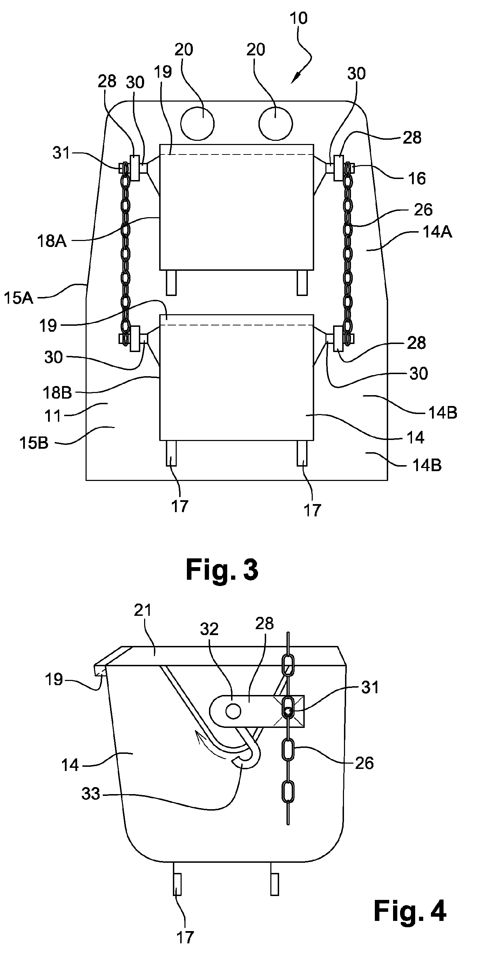

Comme montré sur les figures 3 et 4, le mécanisme 16 de déplacement des cuves comporte deux éléments de traction qui sont des chaînes 26 sur lesquelles chaque cuve 14 est fixée par des moyens de préhension latérale 28. Le mécanisme 16 fonctionne au moyen d'un moteur électrique 29 et chaque chaîne 26 se déplace autour de quatre éléments rotatifs 30 qui sont des roues dentées agencées parallèlement aux parois latérales 15A du conteneur 10. Le mécanisme 16 de déplacement est configuré pour déplacer les cuves 14 le long d'un parcours dont le contour est sensiblement rectangulaire. Ainsi, seule une des deux chaînes 26 est entraînée par un élément rotatif 30, l'autre chaîne 26 étant entraînée par le déplacement de la première chaîne en se déplaçant également sur quatre éléments rotatifs 30. Les deux chaînes 26 sont donc entraînées de façon à déplacer les cuves 14 entre leur position de réception 18A des déchets et une ou plusieurs positions d'attente 14B.

Ainsi les cuves comportent des moyens de préhension latérale 28 par le mécanisme de déplacement des cuves. Ces moyens de préhension comportent des tourillons 31 de forme cylindrique qui sont adaptés pour coopérer avec les maillons de la chaîne 26. Les moyens de préhension permettent aussi le levage des cuves lorsque celles-ci sont vidées dans le camion de collecte. Les tourillons 31 des moyens de préhension latérale des cuves 14 sont fixés aux chaînes 26 afin d'immobiliser les cuves entre celles-ci. Ils facilitent aussi le transport des cuves ou éventuellement leur vidage automatique. Ils comprennent une partie externe 32 en matière plastique, à l'intérieur de laquelle se trouve une section de tube métallique qui permet de les renforcer. Un crochet 33, représenté dans une position décrochée sur la figure 4, est adapté pour être pivoté par l'opérateur afin de venir s'arrimer sur le tourillon 31 lors du positionnement des cuves dans l'enceinte. Ainsi, la fixation des cuves sur la chaîne au moyen des tourillons 31 est sécurisée par le crochet 33, lequel est facile d'utilisation.

On va maintenant présenter le fonctionnement du conteneur de déchets 10. Lorsqu'un utilisateur veut jeter des déchets dans le conteneur 10, il introduit ses déchets à travers l'ouverture d'introduction de déchets 20 du conteneur 10, et ceux-ci tombent dans la cuve située en position de réception des déchets 18A. Lorsque cette cuve est pleine, l'utilisateur appuie sur un bouton de commande (non représenté) du moteur électrique 29, ce qui a pour effet de mettre en marche le mécanisme de déplacement 16 des cuves 14. Le moteur électrique 29 entraîne alors l'élément rotatif 30 auquel il est relié, lequel élément rotatif 30 entraîne alors le déplacement d'une des deux chaînes 26, qui elle-même entraîne le déplacement de l'autre chaîne. Par ce déplacement des deux chaînes 26, la cuve pleine qui se trouve en position de réception des déchets 18A se déplace vers une position d'attente 18B, et est remplacée par une cuve vide qui se déplace vers la position de réception des déchets 18A.

Par la suite, lorsque le camion de collecte vient pour récupérer le contenu des cuves pleines, un opérateur ouvre la trappe de vidage 22 du conteneur de déchets et sort la cuve qui est en position d'attente, en vis-à-vis de la trappe. Afin de vider les autres cuves qui sont en partie basse du conteneur 10, l'opérateur actionne le mécanisme d'entraînement 16 afin de déplacer les cuves en vis-à-vis de la trappe de vidage. Pour vider la cuve, l'opérateur peut utiliser un dispositif du camion de collecte qui permet d'accrocher les moyens de préhension des cuves. Ainsi, il est possible de détacher les moyens de préhension latérale des chaînes et de les utiliser pour le vidage des cuves dans le camion de collecte.

L'invention n'est pas limitée aux modes de réalisation présentés et d'autres modes de réalisation apparaîtront clairement à l'homme du métier. Il est notamment possible que le conteneur comporte des ouvertures d'introduction des déchets situées sur les deux parois frontales 15B, deux positions d'attente dans la partie basse 14B, et deux positions de réceptions des déchets dans la partie haute 14A. Dans ce cas, les deux cuves 14 situées dans la position haute 14A du conteneur prennent simultanément une position de réception des déchets 18A alors que les deux autres cuves 14 se trouvent dans une position d'attente 18B dans la partie basse 14B du conteneur 10.

Dans une variante non représentée, l'élément de traction pourrait être une courroie d'entraînement ou un câble. Dans le cas où l'on utiliserait un câble, les éléments rotatifs ou les roues dentées seraient remplacés par des poulies et dans le cas d'une courroie, les éléments rotatifs seraient un type spécifique de roue dentée adaptée pour entraîner les courroies.

Selon une autre variante, les cuves 14 sont destinées à recevoir différents types de déchets. Par exemple, on peut prévoir deux cuves de réception d'ordures ménagères, une cuve de réception de verre et une cuve de réception de déchets à recycler.

D'autres variations de l'invention peuvent être réalisées, et pourraient porter sur le nombre de cuves ou encore sur le mécanisme de déplacement des cuves qui pourrait fonctionner par exemple grâce à un système à bras de levier qui serait actionnable par un utilisateur du conteneur de déchets. Notamment, dans le cas où les cuves reçoivent des fractions de déchets différentes, l'utilisateur peut éventuellement sélectionner la cuve en fonction du type de déchets qu'il souhaite déposer dans le conteneur. Dans une telle configuration, le conteneur aurait, à la place d'une ouverture d'introduction de déchets, des opercules correspondants à la fraction de déchets à déposer. Ces opercules seraient configurés pour prendre une position ouverte ou fermée en fonction de la fraction de déchets choisie. D'autres caractéristiques du conteneur pourraient être envisagées : par exemple, un système de pesée des bacs, ou encore un système d'alarme en cas de bacs pleins, une condamnation automatique des opercules, un système de contrôle du niveau de remplissage des cuves ou encore un système utilisant le poids des bacs plein pour actionner la mise en mouvement du système.

## Revendications

1. Conteneur de déchets (10) comprenant une ouverture d'introduction de déchets (20) et une enceinte (11) adaptée pour recevoir simultanément au moins une première et une deuxième cuves (14) de réception des déchets, mobiles l'une par rapport à l'autre, **caractérisé en ce que** chaque cuve étant montée sur roulettes (17), le conteneur (10) comprenant un mécanisme de déplacement (16) des cuves (14), permettant de disposer chaque cuve (14) dans une position de réception des déchets (18A), la cuve (14) étant alors en regard de l'ouverture d'introduction des déchets (20), pendant que l'autre cuve (14) se trouve dans une position d'attente (18B), le mécanisme de déplacement (16) étant configuré de sorte que lorsque la première cuve (14) se trouve en position de réception des déchets (18A), la première et la seconde cuve (14) sont superposées l'une au-dessus de l'autre.

2. Conteneur (10) selon la revendication précédente, dans lequel l'enceinte (11) est adaptée pour recevoir simultanément quatre cuves (14), superposées deux à deux.

3. Conteneur (10) selon la revendication précédente, dans lequel lorsque l'une des cuves (14) se trouve dans une position de réception des déchets (18A), les trois autres cuves (14) se trouvent dans une position d'attente (18B).

4. Conteneur selon l'une quelconque des revendications précédentes, dans lequel les cuves présentent chacune quatre roulettes, disposées au bas de chaque cuve et permettant de rouler lorsque les cuves sont extraites du conteneur.

5. Conteneur selon l'une quelconque des revendications précédentes, dans lequel chaque cuve comporte une collerette (19) de préhension par un camion de collecte de déchets.

6. Conteneur selon l'une quelconque des revendications précédentes, comprenant une ouverture (22) de vidage du conteneur, disposée du côté opposé à l'ouverture (20) d'introduction des déchets.

7. Conteneur selon l'une quelconque des revendications précédentes, comprenant un système de contrôle du niveau de remplissage des cuves (14).

8. Conteneur selon l'une quelconque des revendications précédentes, dans lequel le mécanisme de déplacement (16) des cuves (14) fonctionne au moyen d'un moteur (29) ou d'un système à bras de levier actionnable par un utilisateur.

9. Conteneur (10) selon l'une quelconque des revendications précédentes constituant un conteneur d'apport volontaire de déchets.

10. Conteneur (10) selon l'une quelconque des revendications précédentes, comprenant une plaque escamotable, formant une passerelle pour les cuves.

11. Cuve (14) configurée pour être utilisée dans un conteneur (10) selon l'une quelconque des revendications précédentes, comprenant des moyens de préhension latérale (28) par le mécanisme de déplacement (16) des cuves (14), et comprenant de préférence un tourillon (31) adapté pour coopérer avec l'élément de traction (26).

12. Mécanisme de déplacement (16) de cuves (14) pour un conteneur (14) selon l'une quelconque des revendications précédentes.
